# EUROPEAN PATENT APPLICATION

(11) **EP 1 246 105 A1**
(43) Date of publication of application: **02.10.2002**
(21) Application number: 02076293.6
(22) Date of filing: 27.03.2002
(51) Int. Cl.: G06F 17/60

(54) **TRIS (Track Information System)**

(30) Priority: 27.03.2001 NL 1017709; 25.03.2002 NL 1020247
(71) Applicant: Volker Stevin Rail & Traffic BV, 4131 NL Vianen (NL)
(72) Inventor: Van den Beemt, Franciscus Johannes Antonius Maria, 311 BC Dordrecht (NL)
(74) Representative: Assendelft, Jacobus H.W.

(57) **Abstract**

The invention is concerned with the renewal and maintenance system TRIS® running on a computer having a database containing relevant data about a railway track and being programmed to calculate from said data, by applying load related parameters based on maximum allowed train speed, maximum allowed axle load and cumulative passing weight during the time span of interest, a time related quality-figure, wherein said calculation is based on dynamic calculation models to calculate a maintenance strategy according to which maintenance can be carried out such that said track meets the prescribed standards for a predetermined time span.

## Description

The invention is concerned with a renewal and maintenance system, particularly for a railway track, although it is also applicable to overhead catenaries, signalling, verges and other line-based objects. In what follows, the invention will be illustrated by way of its application to a railway track. It is however appreciated that, based on this disclosure, the skilled person will have no difficulty in adapting the invention to another application.

Prior art railway track renewal and maintenance systems are primarily based on trial and error, requiring highly skilled and experienced experts for optimum results in terms of availability (to function properly), costs and quality. Relationships between available data about the railway track is complex and variable such that there is no certainty that the optimum is really obtained.

The objective of the invention is to offer a system providing decision support in renewal and maintenance of line-based objects. Preferably, with the invention the result of a decision can be reliably predicted both quantitatively and/or qualitatively, such that alternative decisions can be reliably compared. According to another aspect, the invention allows to use more and detailed information, improving the reliability of the decision. According to yet another aspect, the invention offers the possibility to optimise between availability and costs of the line-based object.

This objective is obtained by a system running on a computer having a database containing relevant data about the line-based object and being programmed to calculate from said data, by applying load related parameters, a time related quality-figure, for one or more items of said object, wherein said calculation is preferably based on dynamic calculation models (which can be known as such). Preferably, said database contains data about the condition, the occurence of incidents during a previous time span and the alignment of the object or a segment thereof.

An item can be an individual component. E.g. for a railway track such item can be a sleeper, ballast, rail fastening, or a rail bar. Furthermore, for a railway track the load related parameters are based on maximum allowed train speed, maximum allowed axle load and cumulative passing weight during the time span of interest.

In this way the system is able to calculate a prediction of the behaviour of said one or more items on the basis of which the system is able to calculate a maintenance strategy such that the line-based object meets the prescribed standards for a predetermined long time span if said strategy is carried out. This time span depends on the type of line-based object and is typically at least ten years, such as about twenty years. In connection with calculating the maintenance strategy, the system is preferably programmed to calculate relevant decision supporting data, such as the costs of said strategy, the availability and the reliability of the object.

According to a prefered embodiment, the system is programmed to calculate the shortest residual lifetime of an item within a group (e.g. containing all items of a segment of the object) of items, to calculate a time for starting a maintenance cycle for said group of items prior to the end of said calculated shortest residual lifetime, and to calculate for a plurality of maintenance activities to said group of items each time the new shortest residual lifetime of an item within said group of items, wherein these last two calculations are repeated for each maintenance activity until the relevant cumulative shortest residual lifetime at least equals the time span for which the maintenance strategy is calculated.

It will be appreciated that the residual lifetime of an item is determined by the occurence of a predetermined defect, such that if for an item different types of defects can occure, said item will have different types of residual lifetimes. The system can be programmed to calculate as many maintenance strategies as there are different defect types which can occur to an item, such that the operator can make a comparison on the basis thereof.

Preferably, the system is programmed to calculate said time related quality-figure also on the basis of the (calculated) state of another item of said object. Said state can e.g. be maintenance applied to said other item. In this way the system is able to take account of the mutual dependency of items on maintenance when calculating maintenance strategies.

Preferably, the system generates two or more alternative maintenance strategies for mutual comparison in relation with e.g. quality, reliability, availability or costs. In this way, the decision maker is supported in making a rational decision.

It will be appreciated that the system is also programmed such that one or more of his calculation results are made available to the decision maker by way of displaying by e.g. a screen or a printer, connected to the computer.

The database of the system is contained in a computer memory. Preferably, the database is subdivided into several sub databases.

One prefered sub database contains data about the present global status of the object. The data of this global status database are related to, a.o., field measurements carried out on the object and need be updated by updated global field measurements e.g. once a year to ensure reliable calculations by the system. The system is programmed to calculate, on the basis of data from said global status database, said time related quality-figure.

Furthermore, the system can be programmed such that after calculation of said quality figure on the basis of data from said global status database, it makes calculations defining locations on the object for which updated detailed field measurements need be carried out, the results of which detailed field measurements are to be entered into a detailed status database of the system, whereafter the system calculates, on the basis of data from said detailed status database, said quality figure more accurate.

Within the database, the object is defined by one or more different types of items from which it is assembled. Preferably, said object is defined by segments, each segment containing a part of the object of which the items of each type are substantially identical in terms of condition and alignement. The condition is e.g. determined by wear, age and occurence of incidents during the previous time span. In connection with this definition by segments, the system is preferably programmed such that after data of updated field measurements is entered into the database, the system carries out calculations to automatically rearrange the database by dividing a segment into two or more segments or combining adjacent segments into a single segment.

Preferably use is made of a sub database that contains data about the relation of data within two or more other sub databases, such that a so called rule base is provided. According to an advantageous embodiment of this rule base, a first sub database contains a list of items and relevant data, such as price. A second sub database (measurement database) contains a list of measurements that can be selected for each item to maintain the object at or above the required quality level. A third sub database (defect database) contains a list of possible defects and its categories for each type of item. A fourth sub database (rule database) defines the relation between said first, second and third sub databases. wherein this defect database contains for each defect a pointer to the relevant measurement or measurements of the measurements database for repair or replacement.

The system is preferably programmed such that it compares data from the status database with data from the defect database to trace and classify the condition of the items of the object and uses the results thereof in the calculation of said time related quality-figure.

Yet another sub database contains data describing the infrastructure, i.e. the assembly of the object, or a segment thereof, from its items, such that the location of each item and its mutual relationship with other items comes available to the system. This object or segment database preferably contains for each item a pointer to the relevant section or sections of the item database from which the segment is assembled.

In connection with the object or segment database the system can be programmed such that it can e.g. calculate a maintenance strategy wherein a larger number of items is involved compared to the item(s) for which the worst time related quality-figure is calculated, to take account of the possible scale advantages if maintenance is concurrently carried out on more items than required.

A prefered output of the system is for each track a list of the calculated maintenance strategies containing a list of measures to be taken in the coming time span ("maintenance horizon") of several years, such as ten years, and the associated net costs in cash terms for each strategy.

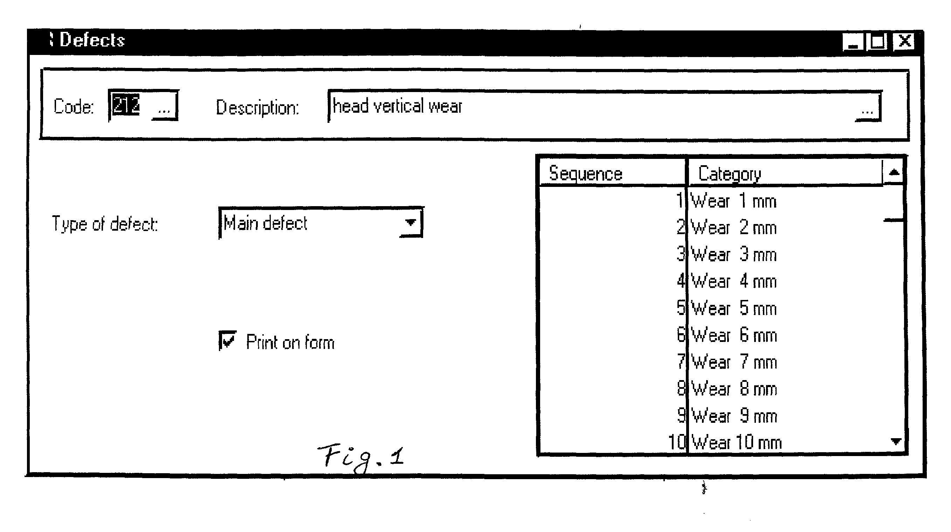

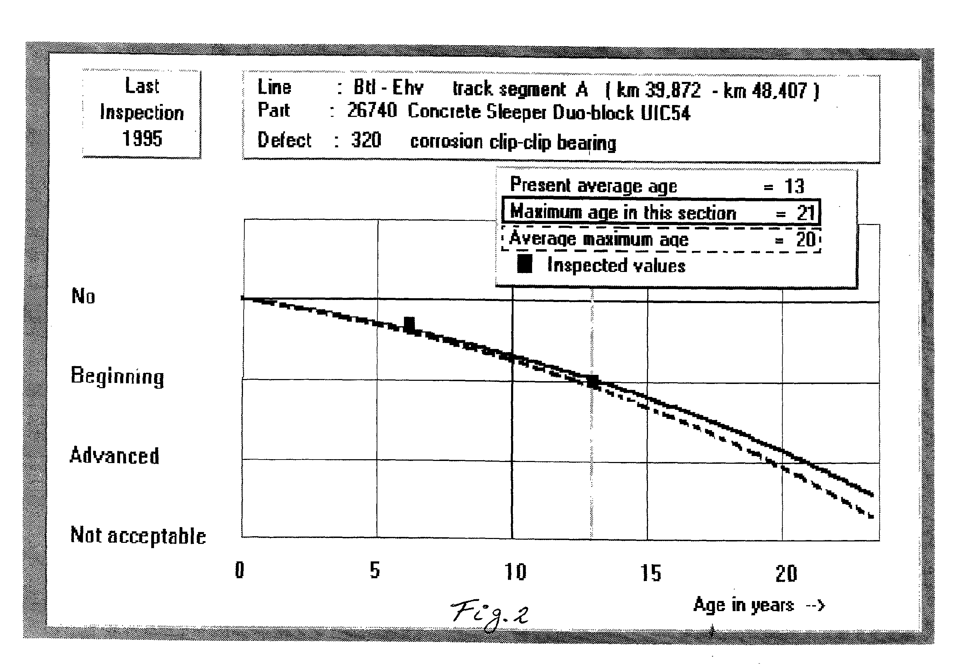

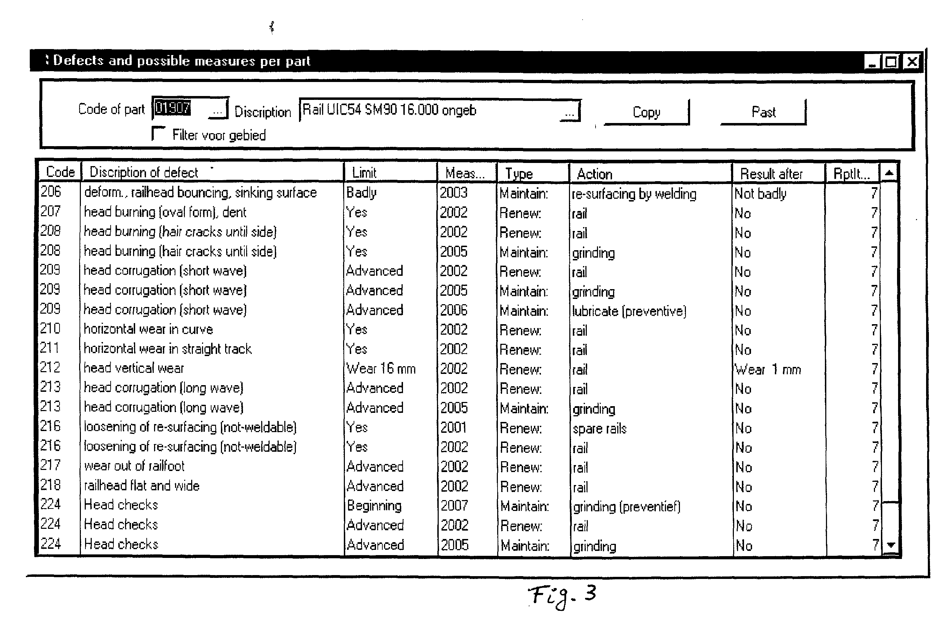

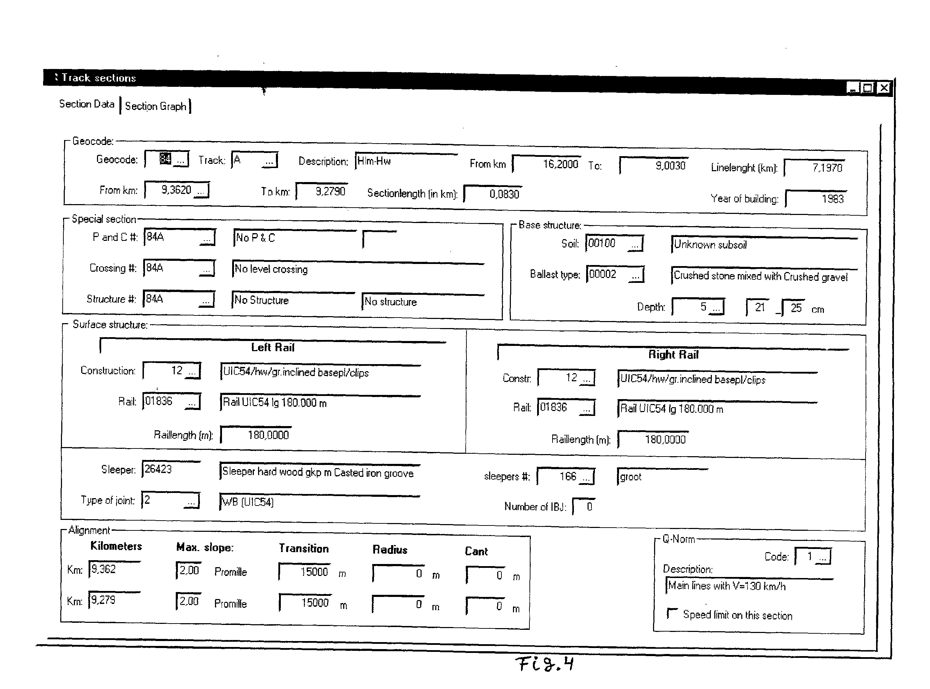

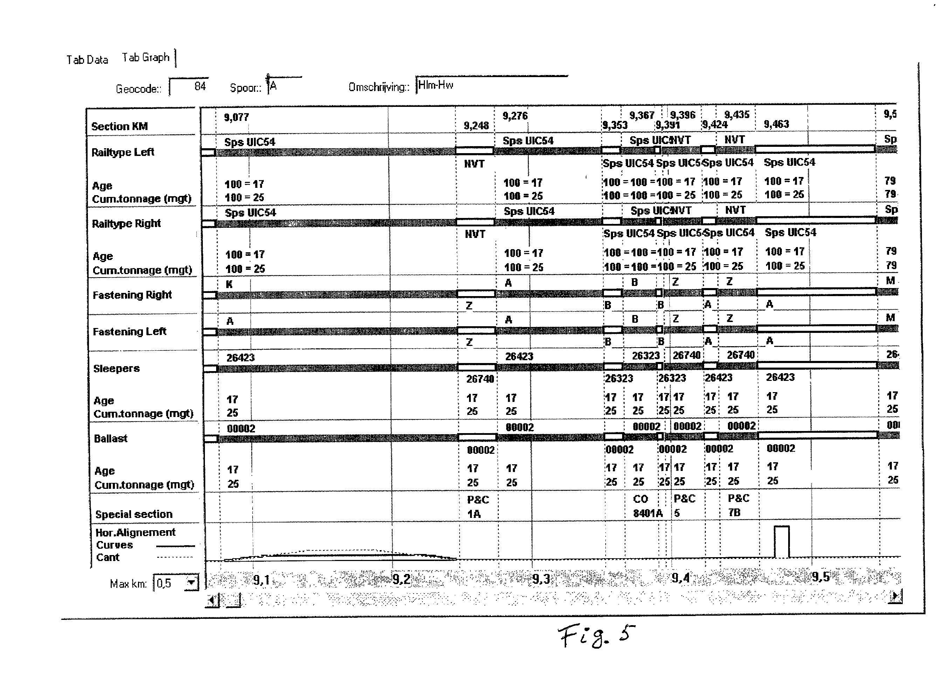

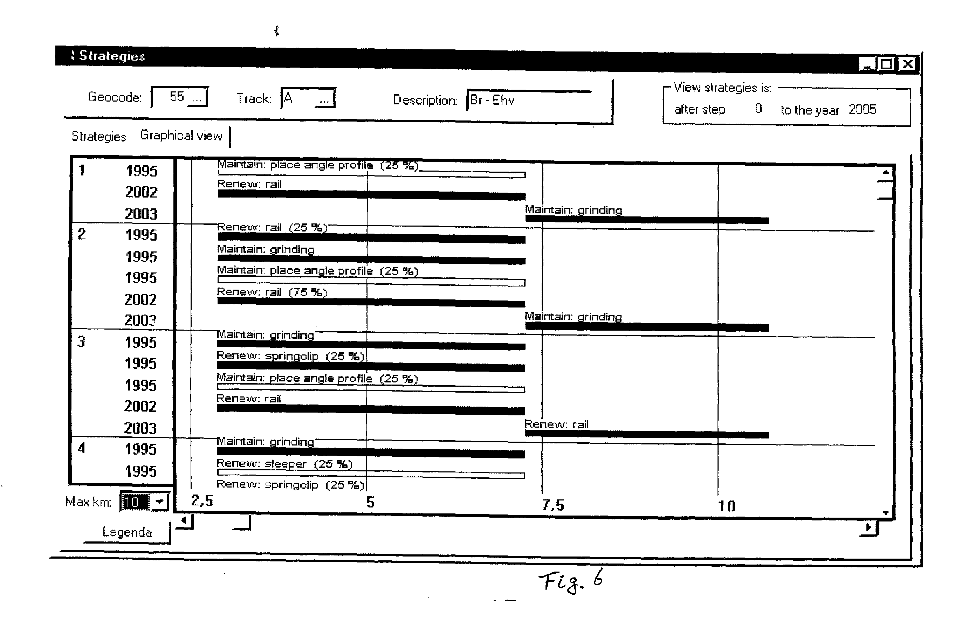

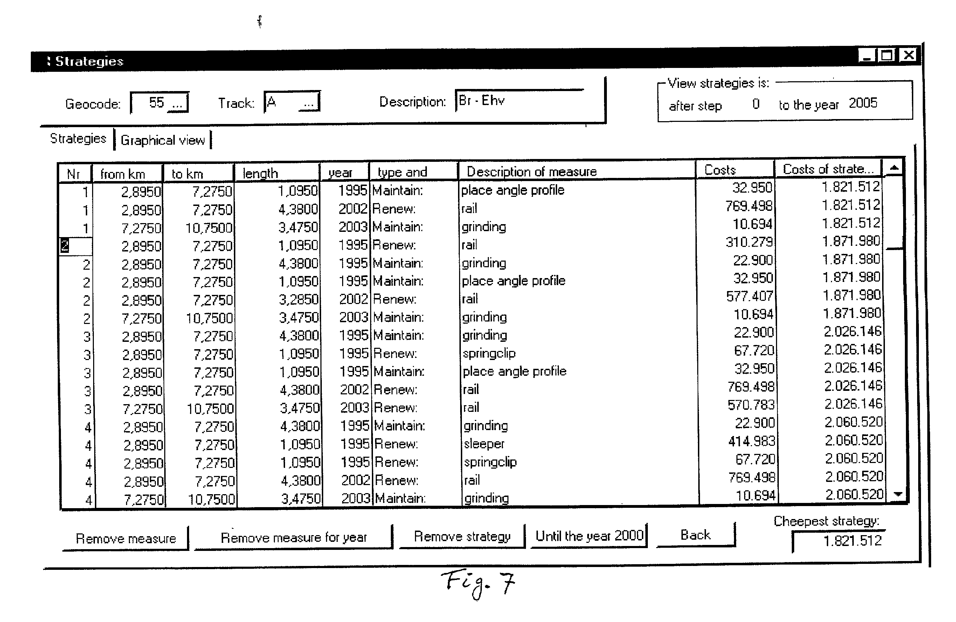

The annexed drawing shows in fig. 1-7 typical photographic screen images from the preferably monitor-type display unit of the system, displaying typical input and output data through which the system communicates with the operator manipulating the preferably keyboard or mouse type input device. The particular system is dedicated to the field of railway tracks.

The exclusive rights of the present applicant for the TRIS system and functionally equivalent systems are governed by both the patent rights granted to the enclosed claims and the copy rights granted to the present disclosure under the relevant national, regional and international laws.

Also preferably, the system is programmed such that it automatically devides the object into uniform segments, the items of such segment are substantially identical for each type in terms of costruction elements and alignement, and accordingly stores the relevant data of said object within the database. Preferably, this deviding into uniform segments is carried out by the system by first deviding the object into first segments according to a first characteristic (e.g. first item type, e.g. rail type) and then by deviding a first segment into second segments according to a second characteristic (e.g. second item type, e.g. rail fastening type). Obviously, this deviding procedure can be repeated for further characteristics until the desired uniform segements are obtained, wherein each time a segment is devided into further segments on the basis of a different characteristic. In a presently preferred embodiment, the object is subdiveded into uniform segments by subsequently applying the following characteristics (in the given order, starting with the first one indicated): particularity (e.g. a switch or bridge); rail fastening type; rail type; foundation type; rail sleeper type; alignement. Application of more or less characteristics is envisaged.

To predict the behaviour, deviding the object into uniform segments is required.

The skilled person will be able to select a definition (e.g. each uniform segment being a file having a header containing, a.o., information identifying it as a uniform segment; the object to which it belongs and/or its location within said object) on the basis of his general knowledge and the present disclosure such that the object structered as a plurality of uniform segments can be stored in the database and the object or a uniform segment thereof can be retrieved therefrom.

Obviously, the object is preferably stored in the database such that for each characteristic applied for the subdivision into uniform segments, the database contains information about its type in relation with its location at the object (e.g. rail type UIC54 for the first five km from a reference point and rail type NP84A for the subsequent three km and rail type UIC54 for the subsequent seven km, and sleeper type A for the first ten km from the same reference point and sleeper type B for the subsequent five km), such that on the basis of this information, the above automatic object dividing procedure can be carried out.

## Claims

1. A renewal and maintenance system running on a computer having a database containing relevant data about a line-based object, e.g. a railway track, and being programmed to calculate from said data, by applying load related parameters based on maximum allowed train speed, maximum allowed axle load and cumulative passing weight during the time span of interest, a time related quality-figure, for one or more items of said object, wherein said calculation is based on dynamic calculation models, said database containing data about the condition, the occurence of incidents during a previous time span and the alignment of the object or a segment thereof, to calculate a maintenance strategy according to which repair and maintenance can be carried out such that the line-based object meets the prescribed standards for a predetermined time span, wherein said system is also programmed such that one or more of his calculation results are made available to the decision maker by way of displaying by e.g. a screen or a printer, connected to the computer.

2. A system according to claim 1, being programmed to calculate the shortest residual lifetime of an item within a group of items, to calculate a time for starting a maintenance cycle for said group of items prior to the end of said calculated shortest residual lifetime, and to calculate for a plurality of maintenance activities to said group of items each time the new shortest residual lifetime of an item within said group of items, wherein these last two calculations are repeated for each maintenance activity until the relevant cumulative shortest residual lifetime at least equals the time span for which the maintenance strategy is calculated; and/or the system is programmed to calculate said time related quality-figure also on the basis of the (calculated) state of another item of said object.

3. A system according to claim 1 or 2, having a global status database relating to field measurements carried out on the object, which is updated by updated global field measurements and used in calculating said time related quality-figure, whereafter it makes calculations defining locations on the object for which updated detailed field measurements need be carried out, the results of which detailed field measurements are entered into a detailed status database of the system, whereafter the system calculates, on the basis of data from said detailed status database, said quality figure more accurate, while the system is programmed such that it compares data from the status database with data from the defect database to trace and classify the condition of the items of the object and uses the results thereof in the calculation of said time related quality-figure.

4. A system according to any of claims 1-3, wherein within its database, the object is defined by one or more different types of items from which it is assembled such that said object is defined by segments, each segment containing a part of the object of which the items of each type are substantially identical in terms of condition and alignement, and the system is programmed such that after data of updated field measurements is entered into the database, the system carries out calculations to automatically rearrange the database by dividing a segment into two or more segments or combining adjacent segments into a single segment.

5. A system according to any of claims 1-4, having a sub database that contains data about the relation of data within two or more other sub databases, such that a so called rule base is provided, wherein a first sub database contains a list of items and relevant data, such as price, a second sub database (measurement database) contains a list of measurements that can be selected for each item to maintain the object at or above the required quality level, a third sub database (defect database) contains a list of possible defects and its categories for each type of item, a fourth sub database (rule database) defines the relation between said first, second and third sub databases, and the defect database contains for each defect a pointer to the relevant measurement or measurements of the measurements database for repair or replacement.

6. A system according to any of claims 1-5, having a sub database containing data describing the infrastructure, i.e. the assembly of the object, or a segment thereof, from its items, such that the location of each item and its mutual relationship with other items is available to the system, which object or segment database contains for each item a pointer to the relevant section or sections of the item database from which the segment is assembled, and the system is programmed such that it calculates a maintenance strategy wherein a larger number of items is involved compared to the item(s) for which the worst time related quality-figure is calculated, to take account of the possible scale advantages if maintenance is concurrently carried out on more items than required.

7. A system according to any of claims 1-6, providing as output for each object (such as a railway track) a list of the calculated maintenance strategies containing a list of measures to be taken in the coming time span ("maintenance horizon"), and the associated net costs in cash terms for each strategy.

8. A system according to any of claims 1-7, which is programmed such that it automatically devides the object into uniform segments, the items of such segment are substantially identical for each type in terms of condition and alignement, and accordingly stores the relevant data of said object within the database, wherein this deviding into uniform segments is carried out by the system by first deviding the object into first segments according to a first characteristic (e.g. first item type, e.g. rail type) and then by deviding a first segment into second segments according to a second, different, characteristic (e.g. second item type, e.g. rail fastening type)

9. A system according to claim 8, wherein each segment is stored in the database as a file having a header containing, a.o., information identifying it as a uniform segment; the object to which it belongs and its location within said object; and/or for each characteristic applied for the subdivision into uniform segments, the database contains information about its type in relation with its location at the object such that on the basis of this information, the above automatic object dividing procedure can be carried out.

10. A method in which use is made of; or a line-based object, e.g. railway track, obtained by applying a method using; the system according any of claims 1-9.
